(19) **Europäisches Patentamt**
**European Patent Office**
**Office européen des brevets**

(11) **EP 2 224 141 A1**

(12) **EUROPEAN PATENT APPLICATION**
published in accordance with Art. 153(4) EPC

(43) Date of publication:
**01.09.2010 Bulletin 2010/35**

(51) Int Cl.:
$F16B\ 11/00$ (2006.01) $\qquad$ $C09J\ 5/00$ (2006.01)
$C09J\ 201/00$ (2006.01) $\qquad$ $F16L\ 13/10$ (2006.01)

(21) Application number: **08869058.1**

(22) Date of filing: **27.11.2008**

(86) International application number:
**PCT/JP2008/071489**

(87) International publication number:
**WO 2009/084348 (09.07.2009 Gazette 2009/28)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.12.2007 JP 2007337449**

(71) Applicant: **Nihonkansen Kogyo Kabushiki Kaisha Hiroshima 721-0956 (JP)**

(72) Inventor: **KOBAYASHI, Masato**
**Fukuyama-shi**
**Hiroshima 721-0956 (JP)**

(74) Representative: **Kramer - Barske - Schmidtchen**
**European Patent Attorneys**
**Landsberger Straße 300**
**80687 München (DE)**

(54) **METHOD AND STRUCTURE FOR BONDING METAL MEMBER TO BE BONDED**

(57) A metal member (3) to be bonded is bonded with an adhesive (6) to have a strength higher than the basic material strength of the metal member (3) to be bonded. A metal insertion coupling has a socket portion (4) in which an insertion hole (2a) for inserting the end portion of the metal member (3) is formed. The socket portion (4) has a tapered outer surface extending from the opening end to the back side. The tensile strength of the socket portion (4) at the deepest position of the center line of the insertion hole is equal to or higher than the tensile strength of the metal member (3) in the direction of the center line. In the metal insertion coupling, insertion hole (2a) is formed to have a larger width as compared with the end portion of the metal member (3) in the range of 0.2 mm - 0.6 mm. The metal member (3) to be bonded is bonded under a state where the end portion of the metal member (3) is pressed into the insertion hole (2a) and an adhesive exists densely between the end portion of the metal member (3) and the inner surface of the insertion hole (2a), by performing quenching or cold working to the end portion of the metal member (3).

FIG. 4

# Description

## FIELD OF THE INVENTION

This invention relates to a method for bonding metal members to be bonded such metal pipes (steel pipes, iron pipes, stainless pipes and so on) or steel boards with an adhesive not by welding, and a metal insertion coupling to be used in this method.

## PRIOR ART

Bonding members to be bonded of non-metal materials to a coupling having a certain shape with an adhesive is described in Patent literature 1 and Patent literature 2.

Patent literature 1 discloses a technology for bonding ends of hard vinyl chloride pipes by inserting into and adhering on an insertion hole of a socket portion of a pipe coupling made of the same material.

In this technology, an inner circumference of the insertion hole of the socket portion is formed in a tapered surface forming a small diameter gradually from the opening side to the back side, and an outside surface of an outer circumference of the socket portion is formed in a tapered surface forming a small diameter gradually from the back side to the opening side. In bonding the end of the hard vinyl chloride pipe to the socket portion, the adhesive is painted to an outer circumference of the end of the hard vinyl chloride pipe and the inner circumference of the insertion hole, and thereafter, the end of the hard vinyl chloride pipe is pressed into the insertion hole.

According to this, because both the hard vinyl chloride pipe and the pipe coupling are made of hard vinyl chloride materials, a swelling layer having a thickness of about 0.1mm is formed to the surfaces on which the adhesive is painted. Besides, because the end of the hard vinyl chloride pipe is pressed into the insertion hole of the socket portion, swelling layers are contacted in a consolidation state to give required adhesive strength.

Besides, because the outer circumference of the socket portion is formed in a tapered surface forming a small diameter gradually from the back side to the opening side, in the opening end surface of the insertion hole of the socket portion, a sudden shape-change in bonding structure wherein the hard vinyl chloride pipe and the socket portion are bonded can be avoided. According to this, the following two effects can be obtained.

That is, one is that stress concentration due to the above-mentioned discontinuous shape is controlled to prevent from breakage near the opening end surface of the hard vinyl chloride pipe.

The other is that a bad effect proper to the hard vinyl chloride pipe caused by a solvent of the adhesive, which leaks on the outer circumference of the pipe near the end surface of the opening when it is painted on the end of the hard vinyl chloride pipe and the insertion hole and the end of the pipe is pressed into the insertion hole, can be avoided effectively. Because the shape change of the socket portion at the opening end surface is little, the leaked adhesive can be completely wiped off and removed.

Further, Patent literature 2 discloses a bonding technique wherein an end of GFRP (glass fiber reinforced plastics) pipe is inserted into and adhered on an insertion hole of a socket portion of a pipe coupling made of the same material.

In this technique, the pipe coupling has an inner circumference of the insertion hole of the socket portion formed in a tapered surface forming a small diameter gradually from the opening side to the back side, and an outside surface of an outer circumference of the socket portion formed in a straight uniform sectional shape. On the other hand, the outer circumference of the end of the GFRP pipe is formed in a tapered surface forming a small diameter gradually toward the end surface. In bonding the end of the GFRP pipe to the socket portion, the adhesive is painted to the outer circumference of the end of the GFRP pipe and the inner circumference of the insertion hole, and thereafter, the end of the GFRP pipe is pressed into the socket portion.

According to this, because the socket portion is formed in the tapered surface forming the small diameter gradually from the opening side to the back side, a sudden shape-change on the opening side end surface of the socket portion can be avoided under a state where the GFRP pipe is bonded to the socket portion as same as Patent literature 1. As a result, it is expected that stress concentration due to the sudden shape-change hardly occurs near the opening side end surface of the socket portion at the time when an external force acts and the breakage of the GFRP pipe can be avoided.

In the Society, as shown in Non-patent literature 1, a tapered shaft coupling was studied long ago, and it has been reported that the tapered shape increases a tensile strength.

Patent literature 1 : Japanese patent provisional publication No. 9-217883
Patent literature 2 : Japanese patent provisional publication No. 5-346187
Non-patent literature 1 : Effects of Coupling Shape to the Strength of Metallic Glued Hollow Shaft Coupling Japanese Mechanics Society Collection (Volume A) vol. 52 No. 477 (1986-5) P1252-1256

## DISCLOSURE OF THE INVENTION

## PROBLEMS TO BE SOLVED BY THE INVENTION

Bonding metal members to be bonded on the strength equal to or higher than the tensile strength in a direction of the central line of the metal member without welding has been desired to apply to construction of a piping structure or a general architectural structure.

While the steel pipes are welded, a fire is handled. Therefore, it is necessary to confirm if the fire is perfectly extinguished then.

On the other hand, in the techniques disclosed in Patent literatures 1, 2, the hard vinyl chloride pipes or the GFRP pipes are bonded with the adhesive. However, steel products of typical material of metal pipes or metal bars have large specific gravity in comparison with material of the hard vinyl chloride pipes or the GFRP pipes, and different properties in transformational strength and viscosity. Besides, the steel products are chemically unfamiliar to the adhesive. Therefore, they are not discussed as the same things.

Non-patent literature 1 refers to the metal pipes different from the former Patent literatures 1, 2, stating that the stress concentration due to the shape-change is hard to occur on the end surface of the socket portion of the coupling in being formed in a taper. However, in this loading test, the couple ruptures on smaller load than 400MPa of tensile strength of general rolled steels, which is resultant force of tensile force (180MPa) and torsion stress (180MPa). In this paper, it is considered that the coupling has been ruptured why plastic deformation occurs on the metal pipe outside the coupling and initial breakage occurs on a bond layer and a boundary face of the coupling end. This identifies that bond strength does not exceed the strength of the metal pipe only by the taper form.

Besides, in Non-patent literature 1, it is reported that the thickness of the bond layer is 0.05 mm. However, in case the difference between the inner circumferential diameter of the socket portion of the coupling and the outer circumferential diameter of the metal pipe to be inserted therein is set up to 0.1 mm, it is very difficult to set up the thickness to 0.05 mm over the whole area of the bonded surface. Because the adhesive painted between the metal pipe and the socket portion is shaved and lost.

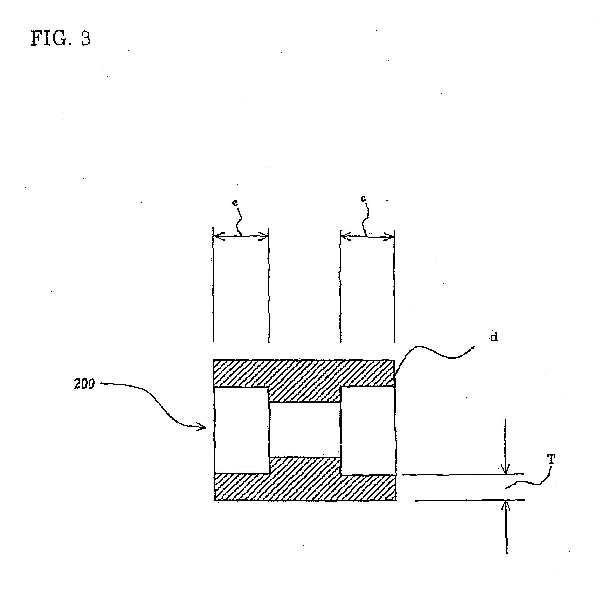

When bonding metal pipes, welding method is commonly used. The thicknesses of couplings to be used are required in accordance with the steel pipe to be bonded in the Japanese Industrial Standards, for example. Concretely, the coupling requires the thickness such as the basic material of the steel pipe to be bonded is cut in a tensile test. Besides, bonding by welding requires weld strength such as the basic material of the steel pipe is cut, too. As shown in Fig. 3, the side d of the coupling 200 is provided that the leg length is extended on the outer circumference of the metal pipe. Here, the inner circumference of the socket portion of the coupling and the outer circumference of the metal pipe merely contact each other, and do not guide the bond strength.

In considering the strength enough to cut the basic material of the steel pipe according to the Japanese Industrial Standards, the breakage occurs on the bonded portion of the coupling side in the bond method of Non-patent literature 1. Therefore, this method can not be used for bonding the steel pipes.

MEANS TO SOLVE THE PROBLEM

This invention aims to bond a metal member to be bonded with an adhesive so as to obtain tensile strength equal to or higher than the tensile strength of the basic material of the metal member to be bonded. To achieve this object, a method for bonding a metal member to be bonded related to this invention is constructed as follows. A metal insertion coupling having a socket portion having an insertion hole for inserting the end of the metal member and being bonded with an adhesive is formed. The socket portion has a tapered outer surface extending gradually from the opening end to the back side. The tensile strength of the socket portion at the deepest position in the direction of the center line of the insertion hole is equal to or higher than the tensile strength of the metal member in the direction of the center line. In the metal insertion coupling, the insertion hole is formed to have a larger width as compared with the end portion of the metal member in the range of 0.2 mm - 0.6 mm. The metal member to be bonded is bonded under a state where the end portion of the member is pressed into the insertion hole and the adhesive exists densely between the end portion of the metal member and the inner surface of the insertion hole, by performing quenching or cold working to the end portion of the metal member.

Besides, in the method for bonding a metal member to be bonded related to this invention, ball members can be positioned between the metal member to be bonded and the inner surface of the insertion hole in a monolayer or in all directions.

Besides, in a structure for bonding a metal pipe and a coupling related to this invention, a socket portion of the coupling is formed as follows. An inner circumference of an insertion hole for inserting the metal pipe is formed in a circular cylinder almost concentrically with the corresponding socket portion. The socket portion has a tapered outer surface extending gradually from the opening end to the back side. The tensile strength of the socket portion at the deepest position in the direction of the center line of the insertion hole is equal to or higher than the tensile strength of the metal member in the direction of the center line. The outer circumference of the end portion of the metal pipe is parallel to the above-mentioned circular cylinder. The cylinder is formed to have a larger inner diameter as compared with an outer diameter of the metal pipe in the range of 0.2 mm - 0.6 mm. The end portion of the metal member is quenched or cold worked, and an adhesive exists densely between the outer circumference of the end portion of the metal pipe and the inner circumference of the insertion hole.

EFFECTS OF THE INVENTION

According to this invention, the transformation of the end portion of the metal member to be bonded, which is caused when the tensile force in the direction of the center line of the metal member to be bonded acts on the structure for bonding the end portion and the metal insertion coupling, can be prevented because the end portion is hardened through quenching or cold working. Therefore, the stress is properly decentralized by the taper effects, and an adhesive can show adhesive force as a specification. Accordingly, if the bond area is set up so that the adhesive force is higher than the strength of the basic material of the metal member to be bonded, the basic material is to be cut when tensile force is excessively charged.

BRIEF DESCRIPTION OF THE DRAWINGS

[Figure 1] This is a sectional view of a metal insertion coupling.
[Figure 2] This is a view showing a relation of the thickness of an adhesive layer and the bond strength thereof.
[Figure 3] This is a sectional view of an insertion coupling related to the Japanese Industrial Standards.
[Figure 4] This is a sectional view showing bonding structure in which a metal pipe is inserted into the metal insertion coupling.
[Figure 5] This is a view showing a method for pouring the adhesive.
[Figure 6] This is a sectional view showing another bonding structure.
[Figure 7] This is a sectional view showing another bonding structure.
[Figure 8] This is a sectional view showing another bonding structure.
[Figure 9] This is a sectional view showing another bonding structure.
[Figure 10] This is a view showing the results of the examination.
[Figure 11] This is a sectional view showing another bonding structure.
[Figure 12] This is a sectional view showing another bonding structure.
[Figure 13] This is a sectional view showing another bonding structure.

EXPLANATION OF REFERENCED NUMERALS

1       a coupling body
2a      an insertion hole
3       a metal member to be bonded (a metal pipe, a metal bar)
3a      an end portion
4       a socket portion
5       a ball member
6       an adhesive
100     a metal insertion coupling

E       a shape datum point
L1      an adhesion length due to strength calculation

PREFERRED EMBODIMENT OF THE INVENTION

The following is an example of the invention with reference to the figures.
At first, a metal insertion coupling for plumbing, which is used in this example, will be explained.

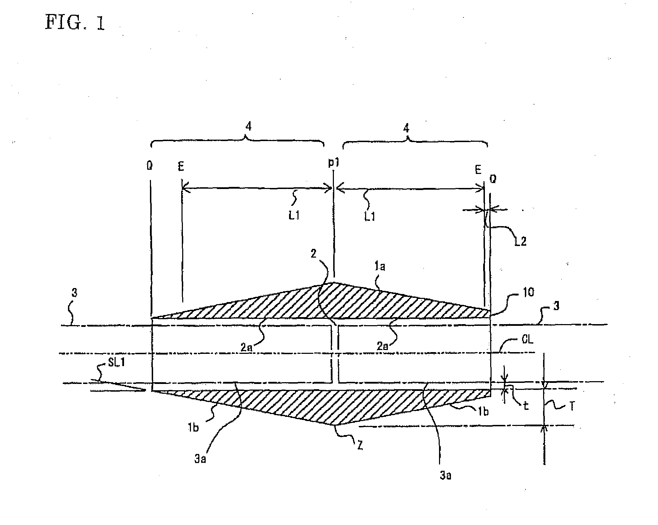

Fig. 1 is a sectional view of the metal insertion coupling. In Fig. 1, a metal insertion coupling 1a is a single cylinder made of metal material, having a straight hole 2 at the center. As the metal material, for example, FC (Fine Ceramics), SS (Stainless Steel), SF (Carbon Steel Forgings), SC (Carbon Steel Castings), which are the Japanese Industrial Standards, are generally used. The material is not limited to these and may be optional one suitable for a metal pipe (metal member to be bonded, metal plumbing) 3 to be bonded by the coupling 1a.
The metal insertion coupling 1a has a central portion p1 with the maximum diameter in the length direction. The central portion p1 divides the metal insertion coupling 1a symmetrically. The straight hole 2 is composed of a cylindrical surface, and whose sections are equal. Each of end portions Q of the coupling 1a in the length direction (at a left half position, at a right half position) opens to left direction and right direction respectively. In the end portion Q, the length range to the back side (a half length of a coupling body 1) constitutes an insertion hole 2a in which the end portion 3a of the corresponding metal pipe 3 is inserted. The right and left half portions of the coupling 1a near the central portion p1 form right and left socket portions 4 respectively. Each socket portion 4 has a tapered surface extending from the back side to the opening to diminish the diameter gradually. A section of the end of the opening of the socket portion 4 forms a knife edge. However, as shown in the right side of Fig. 1, the end portion can be cut off by cutting on the surface orthogonal to a center line CL of the socket portion 4 so as to bond the metal pipe 3 and the coupling 1a easily and precisely. In an example of this figure, the end of the opening of the socket portion 4 is located at the position Q near the central portion p1 than the end of the left opening by several mirimetors. An opening end surface 10 having a radial width is formed at the position Q. In this figure, a distance L1 from the portion p1 to a point E is a minimum necessary length as later discussed, and a distance L2 is an interval from the opening end surface 10 to the point E. Besides, a place where is cut and cut off exists outside the point E.
Next, the bonding structure based on this example will be explained in order of next.

(A)     Choice of materials and the diameter of the metal pipe
(B)     Material and the thickness of the coupling body
(C)     Shape and the bond area of the coupling body

(D)     The thickness of the adhesive

(E)     Treatment of the portion of the pipe to be bonded

(A) Choice of materials and the diameter of the metal pipe

The materials and the diameter of the metal pipe 3 are chosen in accordance with requirements for use. According to this, a diameter of an inner circumference of the insertion hole 2a of the coupling 1a is decided. That is, a diameter of the insertion hole 2a is larger than the outer diameter of the end portion 3a of the metal pipe 3 to be inserted in the range of 0.2 mm - 0.6 mm.

The significance for placing the lower limit to 0.2 mm depends on the operations. When it is smaller than 0.2 mm, an interval between the insertion hole 2a and the end portion 3a of the metal pipe 3 becomes smaller than 0.1 mm. Therefore, it is difficult to insert the end portion 3a into the insertion hole 2a, and besides, it is difficult to standardize the thickness of an adhesive layer existing between the inner circumference of the insertion hole 2a and the end portion 3a of the metal pipe 3. On the other hand, the significance for placing the upper limit to 0.6 mm depends on the bond strength. When it is larger than 0.6 mm, the interval between the insertion hole 2a and the end portion 3a of the metal pipe 3 becomes larger than 0.3 mm and the bond strength of the adhesive layer drastically fails.

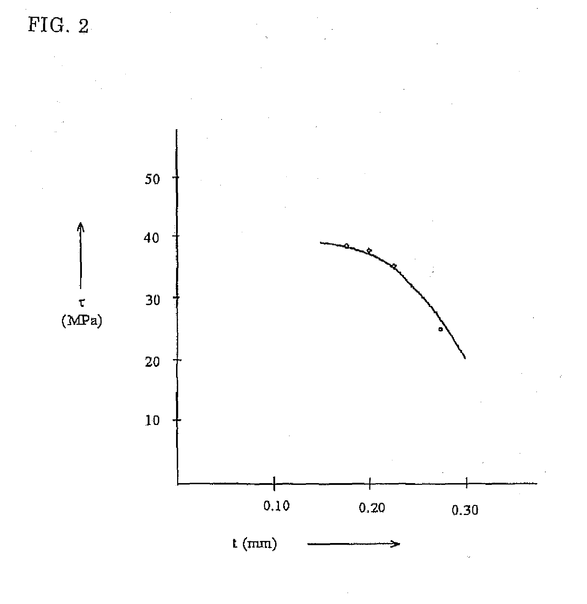

Fig. 2 shows a relation of the thickness of the adhesive layer and the bond strength. An axis of abscissas shows the thickness t of the adhesive layer, and an axis of ordinates shows shearing stress $\tau$(break strength of the adhesive layer) at the time when the adhesive layer is broken. As shown in Fig. 2, in the range that the thickness of the adhesive layer is larger than 0.17 mm, the shearing stress $\tau$ drops at a large ratio as the thickness of the adhesive layer increases. Accordingly, to appear the strength of the adhesive layer effectively, it is preferable that the thickness t of the adhesive layer is made no greater than 0.3 mm. More strictly speaking, it is preferable that it is made no greater than 0.17 mm.

(B) Material and the thickness of the coupling body

Fig. 3 is a sectional view of an insertion coupling 200 for laying pipe related to the conventional JIS (JIS B 2316-1986). The coupling 200 has been already used in various kinds of pipe laying, and the socket portion thickness T (JIS thickness) for satisfying the required strength is provided at every diameters.

The JIS "B 2316-1986" prescribes for sch80 and sch160 about the metal insertion couple 200 in case of FC material. When bonding the metal pipe 3 having a smaller pipe thickness than the sch80, the thickness T of the sch80 is made a standard. Besides, when bonding the metal pipe 3 having a pipe thickness from the sch80 to the sch160, the thickness T of the sch160 is made a standard. The thickness at the deepest position (p1) of the socket portion of the insertion couple 1a is made no less than the socket portion thickness T due to the JIS.

(C) Shape and the bond area of the coupling body

An area of the bonded surface (bond area) necessary for the adhesive layer is calculated by multiplying the diameter of the outer circumference of the metal pipe 3 for being inserted into the insertion hole 2a, the length L1 (the length in a direction of a center line CL) of the socket portion 4 in the adhesive layer and the circular constant $\pi$. The length L1 is the minimum necessary length (the bonding length on calculating the strength) in the direction of the center line of the socket portion 4 in the adhesive layer. The bond area is so chosen that the adhesive layer does not receive stress higher than stress at the time when it is broken (shearing stress at the time when the adhesive layer is broken) even if the same force as the tensile breaking force of the metal pipe which is the metal member 3 to be bonded. When the tensile breaking force of the metal pipe is made F1, the minimum necessary length L1 is calculated by the following expression (1).

$$L1 = F1 \ / \ \pi r \tau \cdots \text{an expression (1)}$$

Here, $\tau$ is the bonding strength of the adhesive (shearing stress per the unit area at the time when the adhesive layer is broken), and r is an outer diameter of the metal pipe.

In this way, the minimum necessary length L1 is determined, and the adhesive is painted from the deepest position p1 of each of right and left socket portions 4 to a position (E) that is only the minimum necessary length L1 away from the opening side of the socket portion 4.

Next, the opening end is positioned. The opening end is set up to a position (Q) that is equal to the position E or further away from the position p1. A tapered surface 1b forming the outer circumference of the socket portion 4 is made so as to include a straight line SL1 combing the position Q and an outer circumference position Z which is higher than a thickness T at the deepest position (p1) of the socket portion. According to this, the tapered surface 1b is defined. Here, an angle of the taper is preferably 3 degree to 12 degree. As much as the angle becomes small, the distortion by the stress shrinks. When the angle is small, the thickness of the opening end of the couple is thin and therefore strength is small. On the other hand, when the angle is large, the thickness at the deepest position of the socket portion 4 is thick and the cost of materials increases. Accordingly, it is preferable that the angle is chosen 5 degree to 7 degree for a real product.

The shape of taper is superior to disperse stress. However, the stress distortion on the opening portion of the socket portion is larger than that of another bonded portion even any taper angle. Accordingly, the stress distortion of the opening portion, which is generated when tensile force equal to the basic material strength of the metal pipe is added, may be made so as not to exceed the bonding strength of the adhesive. Besides, the length of the taper portion had better be long to disperse the stress, and therefore, the slant goes on a position just over the deep position of the socket portion, where the tip of the metal pipe reaches at least.

In the metal insertion coupling 1a, the inner circumference from the position E to the opening end Q of the insertion hole 2a in each socket portion 4 is bonded to the end portion 3a of the metal pipe 3 with the adhesive. According to this, the metal insertion couple 1a has made progress in strength. In this case, it can be so constructed that water is restricted from entering the deep position between the insertion hole 2a and the end portion 3a of the metal pipe 3 by fitting a ring sealing member at an optional position between the inner circumference from the position E to the opening end Q of the insertion hole 2a and the end portion 3a of the metal pipe 3.

(D) The thickness and the homogeneity of the adhesive

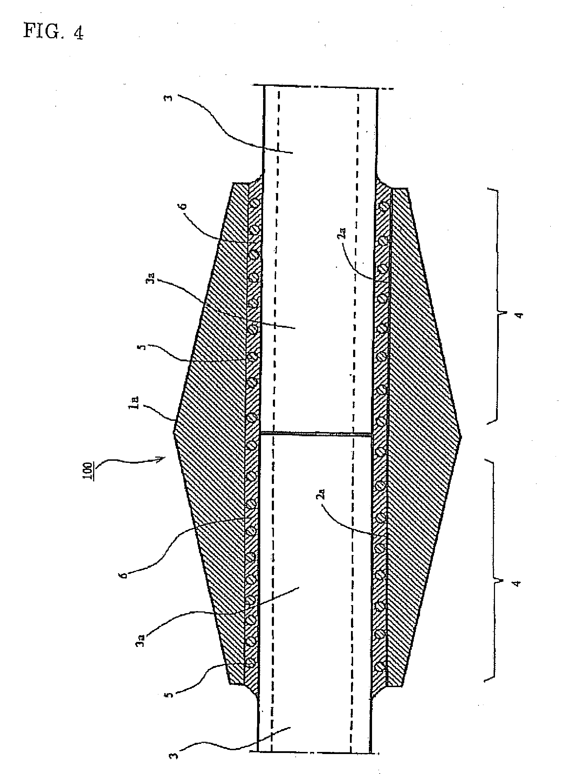

Next, the metal pipes 3 are bonded through the above-mentioned couple 1a as follows. Here, Fig. 4 is a sectional view showing a bonding structure in which a metal pipe is inserted into the metal insertion coupling. A metal insertion coupling 1a to be prepared has an insertion hole 2a larger than the outer diameter of the metal pipe 3 by 0.2 - 0.6 mm.

As shown in Fig. 4, the end portion 3a of the metal pipe 3 is inserted into the insertion hole 2a of the socket portion 4 of the couple 1a, and many ball members 5 are positioned between the outer circumference of the end portion 3a and the inner circumference of the insertion hole 2a in a single layer and in dots. Here, the ball members 5 are densely painted with an adhesive 6.

Then, the adhesive 6 (may be equal to the adhesive for painting on the ball members 5) is painted on the outer circumference of the end portion 3a and/or the whole inner circumference of the insertion hole 2a of the socket portion 4, and thereafter, the end portion 3a is pushed to the position p1 inside the insertion hole 2a. Here, the position p1 (the deepest position) is a predetermined position. Then, thus conditions are continued until the adhesive 6 solidifies so as to keep the relative position between the metal pipe 3 and the socket portion 4 by its adhesive strength.

The adhesive 6 overflowed from the insertion hole 2a at the time when the end portion 3a is pushed therein is wiped before it solidifies.

Thereafter, it is waited until the adhesive 6 develops the predetermined strength.

In this case, a liquid heat-curing epoxy structural adhesive (for example, Sumitomo 3M Co. Ltd.,

"Scotch-WeldXA7416" etc.) is preferably used as the adhesive 6. The bonded surface is strengthened in adhesive strength by degreasing and painting primer.

The ball members 5 can be made of metal, ceramics or glass. For example, if beads are used, it is possible to prepare ones each having an optional diameter easily. In case of ceramics or glass, they may be broken by an impact at the time when the metal pipe 3 is inserted. Therefore, it is necessary to operate carefully. The diameter of a ball member 5 is made from the predetermined minimum thickness of the layer due to the adhesive 6 to the predetermined maximum thickness. For example, when the adhesive 6 is the liquid heat-curing epoxy structural adhesive, the diameter is generally made within the range of 0.1 mm - 0.25 mm.

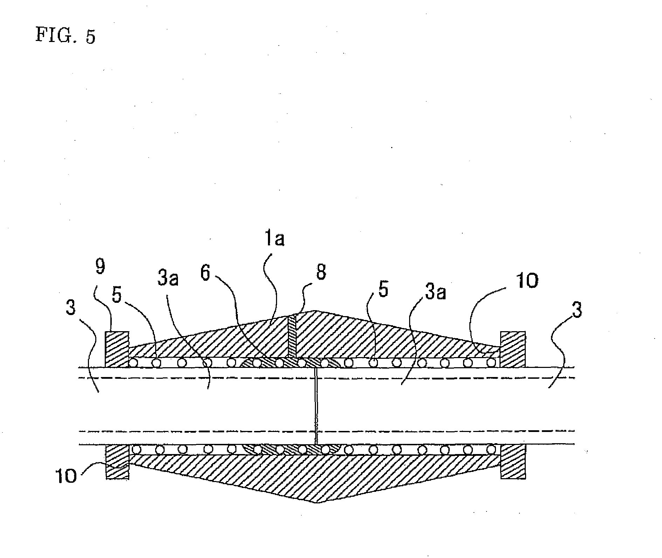

In setting the ball members 5 on the bonding surface in advance, it is possible to keep a space between the metal pipe 3 and the inner circumference of the insertion hole 2a. Therefore, it is possible to supply the adhesive on the bonding surface by forcing the adhesive into a through hole which links from the outer circumference around the center of the metal insertion couple 1a to the inside bonding surface and inserts the metal pipe 3. For example, in Fig. 5, an opening end surface 10 is sealed with a block 9 under the condition that the ball members 5 are set on the bonding surface in advance. A through hole 8 is provided to the metal insertion coupling 1a, and the air is let out of it so as to form a vacuum. Thereafter, the adhesive 6 is poured into the space from the through hole 8.

Besides, the space of 0.1 mm - 0.3 mm can be kept over the whole bonding surface by precisely fixing the metal pipe 3 and the metal insertion couple 1a with a tool without the ball members 5. In this case, an operation is difficult to be carried out at building site and can be carried out with only indoor materials needed for the manufacture of machinery in a laboratory or a factory. Although the ball member 5 mixed into the adhesive in advance may be arranged, it is necessary to arrange the ball member 5 at the single layer.

(E) Treatment of the portion of the pipe to be bonded

Previous to the adhesion, the end portion 3a is stiffened. The end portion 3a is heated beyond an austenite territory, then rapidly cooled with a suitable refrigerant to be stiffened as a martensitic structure. This is known as a quenching method. In this case, to increase a carbon amount in a surface layer of the steel, the quenching method may be carried out after heating in carburizer. According to this, the strength is increased and the end portion 3a is hardly transformed. A cold working for giving plastic transformation under a recrystallizing temperature can be used as a stiffening method, too. Though a steel pipe must have some elongation from the standpoint of JIS, the end portion 3a of the metal pipe is restricted from the elongation due to the above-mentioned treatment. The adhesive is to be painted on the end portion 3a to be stiffened, where is shown in a length L1. However, it is impossible technically to stiffen only the range of the length L1. On the contrary, it does not have any problem to stiffen a little wider range than the length L1. The range to be stiffened is at least within the length L1, and a wider range than the length L1 (for example, 1.5 times of the length L1) can be also stiffened. Besides, on quenching, it is good to use a high frequency quenching for instantly heating and cooling only a required portion.

It is good to stiffen the circumference of the end portion 3a by the cold working in substitution for quenching.

The outer circumference of a carbon steel pipe of the JIS (such as SGP (Carbon-steel piping), STPG (Carbon steel pipe for pressure), STS (Carbon steel pipes for high pressure piping)) is not always complete round. Therefore, when the end portion 3a is not formed in a right circular cylinder surface of the complete round, the metal pipe 3 is cut circular with a lathe.

(Modified example 1 about the metal insertion couple)

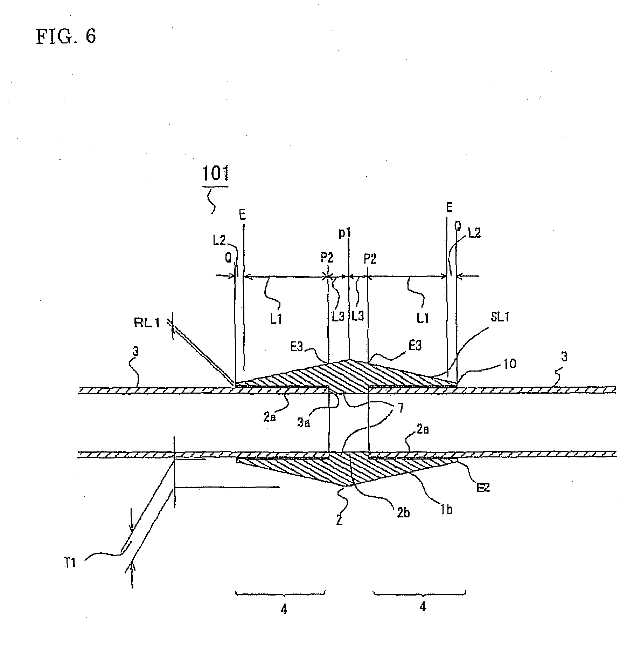

Fig. 6 is a sectional view showing a bonding structure 101 related to the modified example. The deepest position p2 of each socket portion 4 is not corresponded to the portion p1 where the center of the metal insertion couple 1b is and displaced from the portion p1 to the opening side of the socket portion 4 by an adequate length L3. The distance between the deepest position p2 of each of right and left socket portions 4 and the corresponding portion E is set a length L1 as same as the case of Fig. 1. Accordingly, in this bonding structure 101, the distance between the position E in a left half area of the metal insertion couple 1b and the position E of a right half area thereof is lengthened twice the distance L3 in Fig. 1.

An inner surface portion 7 is formed on each of the deepest position p2 in the left half area and the deepest position p2 in the right half area. The diameter of a hole portion 2b formed by the inner surface portions 7, 7 is made smaller than that of the inner circumference of the insertion hole 2a, and larger than the diameter of the inner hole of the metal pipe 3 to be inserted into the insertion hole 2a.

The length L2 from the position E to the opening end surface is 0.2 times as much as the length L1. The radial length RL1 from the inner circumference to the outer circumference of the insertion hole 2a in the opening end surface 10 is set several millimeters (for example, 0.5 mm - 3 mm) in the effective handling. The straight line SL1 combing the position E2 of the outer circumference of the opening end surface 10 and the position Z specifies a tapered surface forming the outer circumference of the corresponding socket portion 4. Besides, in the figure, the same reference numbers are marked to the corresponding portions of the metal insertion couple 1a.

According to this modified example, when the end portion 3a of the metal pipe 3 is inserted into the insertion hole 2a of the corresponding socket portion 4, the tip of the end portion 3a contacts on the inner surface portion 7. Even if the end portion 3a is pushed into a position where further approach is restricted, the metal pipe 3 is located at the predetermined position precisely. Therefore, even if quantity of pushing of the metal pipe 3 to the socket portion 4 is not measured by a measuring instrument, both the metal pipe 3 and the socket portion 4 can be relatively arranged precisely. Another point is constructed according to the case of Fig. 1. Irresponsive to the strength of the couple, a length L3 can be arbitary selected.

(Modified example 2 of a metal insertion couple)

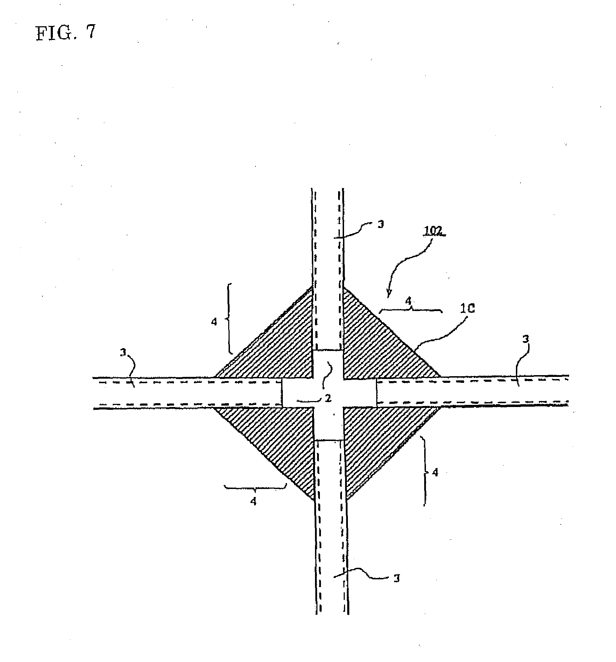

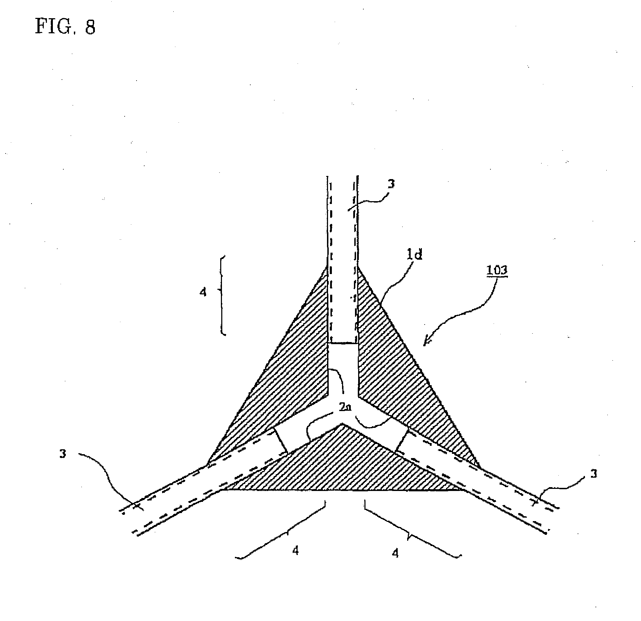

Fig. 7 shows a bonding structure 102 related to another modified example. A metal insertion couple 1c to be used for the bonding structure 102 has each end portion in four different direction formed a socket portion 4, which bonds four metal pipes 3 in a cross-shape. Fig. 8 shows a bonding structure 103 related to another modified example. The bonding structure 103 is to bond three metal pipes 3 in a Y letter shape with a metal insertion couple 1d having the socket portions 4 in three different directions. Two metal pipes 3 may be deformed to bond in a L letter shape with a metal insertion couple having two socket portions 4 whose center lines intersect at right angles.

(Modified example 3 of a metal insertion couple)

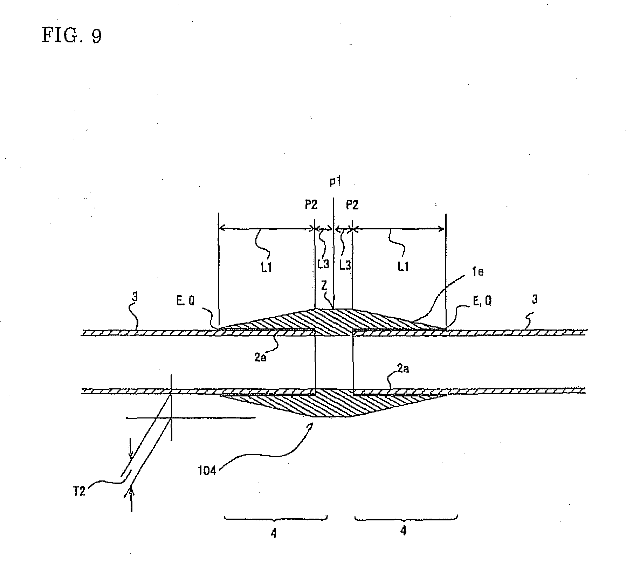

Fig. 9 is a section view of a bonding structure 104 related to another modified example.
In Fig. 9, as same as the case of Fig. 1, a central portion p1 in a direction of the length of a metal insertion couple 1e is positioned at the deepest position of the socket portion 4 at each of right and left sides. The thickness T2 at the position p2 of the metal insertion couple 1e has a tensile strength equal to or higher than the tensile strength of the metal pipe 3. For example, the thickness T2 is determined to be higher than the thickness of the metal pipe 3. The opening end Q accords with the position E, and therefore, an interval between the right position p1 and the left position p1 remains in the thickness T2.

<Experimental example>

The inventors bonded two metal pipes (SGP20A) 3, 3 with adhesive "Scotch-WeldXA7416" made by Sumitomo 3M through the metal insertion couple 1b of Fig. 6 and performed a tensile test. In this bonding structure, the adhesive length L1 of the end portion 3a is determined to 38 mm (L2 = 0 mm) from the strength calculation. The taper angle is set 7 degrees. In this experimentation, the metal pipe and the couple are fixed and bonded through tools so as to keep an interval of 0.1 mm without the ball member 5.

(1) The end portions 3a of the metal pipes 3 were bonded through the couple 1b without quenching or cold working. Then, the tensile strength in the direction of the center line CL was given and increased. After the tensile strength was over 50 kN, the end portions 3a inserted into the insertion hole 2a spread and reduced the diameters thereof. In this case, the adhesive bonding between the inner circumference of the insertion hole 2a and the end portion 3a of the metal pipe 3 was destroyed, and they separated.

(2) The quenching was tried around the end portions 3a of the metal pipe 3 (in the range of the 1.5 times as much as the length of the end portion 3a to be inserted into the insertion hole). When the tensile strength in the direction of the center line CL reached 85 kN, the bonding structure between the metal insertion couple 1b and the metal pipe 3 was not ruptured, whereas the basic material portion of the metal pipe 3 was ruptured.

(3) The inventors investigated a tensile that the adhesive surface was ruptured on the same adhesive area (L1 = 38 mm) as the former experiment for a steel pipe having the same diameter and higher strength than the SGP20A (STPT410, SCH160) to measure the bonding strength. As a result, when the tensile strength was over 150 kN, the adhesive surface was ruptured. The thickness was controlled in 0.1 mm as same as the former experiment. After the rupturing test, the thickness of the adhesive surface was measured about 0.15 mm by a micrometer.

According to the experiment, the bonding strength $\tau$ of the adhesive was 46.2 MPa that 150 kN, which is a ruptured load of the adhesive surface in using the metal pipe 3 (STPT410, SCH160), is divided by 3246 $mm^2$, which is the adhesive area.
The adhesive length L1 for an optional metal pipe to be bonded is calculated by dividing a ruptured strength F1 of the metal pipe by 46.2 MPA of the bonding strength $\tau$ of the adhesive, which is found in the experiment, and an inner circumference length of the metal pipe 3 ($\pi r$ : r is an outer diameter of the metal pipe).

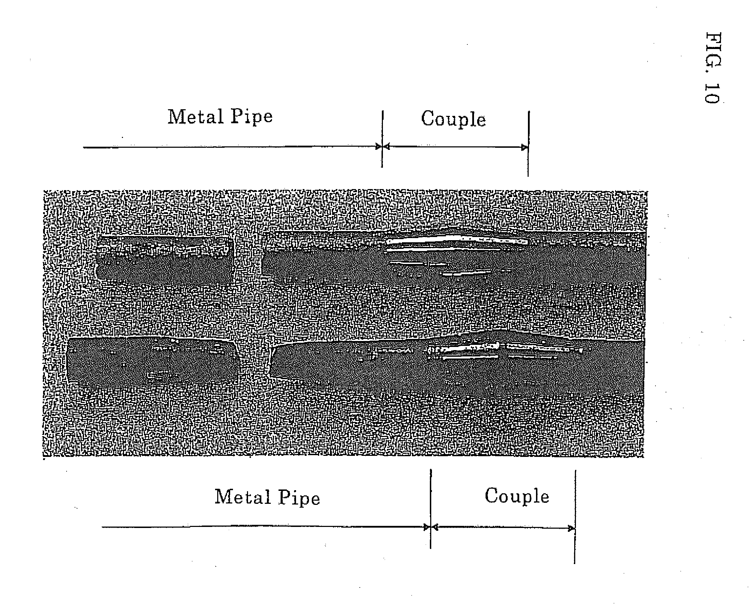

The bonding structure 101 due to the quenched couple 1b can be used as a strength member for the tensile. When a 85 kN tensile test was performed for the quenched metal pipe (SGP20A), not the couple but the metal pipe side was ruptured. The state is shown in Fig. 10.

(An example applied to a metal board)

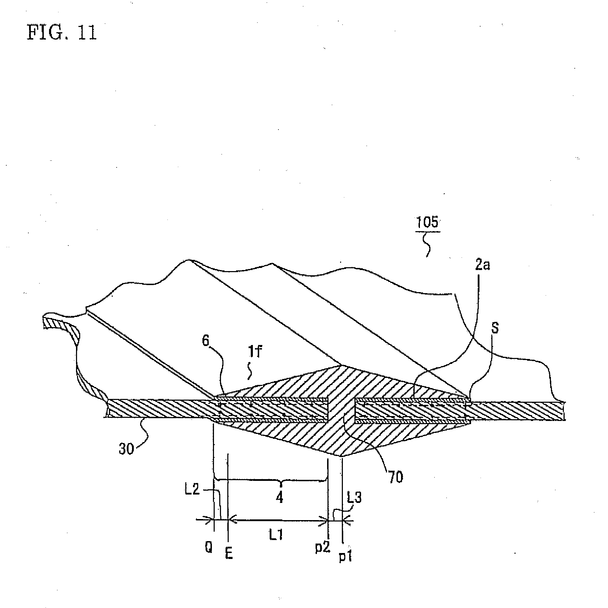

As for also a metal board, a transformation occurs on an adhesive portion 6 by adding tensile strength. Fig. 11 shows a bonding structure 105 for bonding the metal board. In the figure, as shown in a broken line S, a stress such that the thickness comes to be thin is generated by adding tensile strength to right and left sides of a metal board 30.

The stress is dispersed by forming the top and bottom of the socket portion of the couple taper. However, distortion observed at the end portion of the socket portion 4 is large and the force acts in a direction for exfoliating the adhesive surface.

In this embodiment, the same reference numbers are marked to the portions corresponding to the metal insertion couple 1a. As shown in Fig. 11, a metal insertion couple 1f is displaced to the socket portion 4 from the position p1 of the center of the couple 1f by a suitable distance L3 in the state that the deepest position p2 of each socket portion 4 does not accord with the position p1. The distance between the deepest position p2 of the socket portion 4 of each of the right and left sides of the couple 1f is set the same length L1 as the case of Fig. 1. A connecting portion 70 is formed between the deepest position p2 of the socket portion 4 within the left half of the couple 1f and the deepest position p2 of the socket portion 4 within the right half thereof, and the top and bottom tapered surfaces are connected at the position p1.

In this embodiment, too, the end portion of the metal board is quenched or cold-worked, and therefore, the bonding portion is restricted from transformation. As a result, if the adhesive area is so determined that the length L1 is kept higher than the tensile strength of the metal board, the basic member of the metal board is ruptured when the tensile force is added. Therefore, the board can secure the efficiency of a couple.

The insertion hole 2a for inserting the metal board 30 had better have at least two facing planes. In a relation between the thickness of the metal board 30 and the width of the insertion hole 2a of the socket portion 4, the width of the opening is enlarged 0.2 - 0.6 mm as same as another bonding structure.

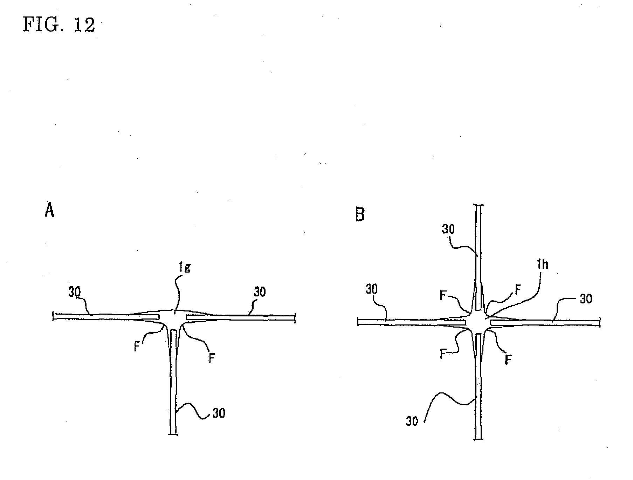

A modified example of the couple like this is shown in Fig. 12. The couple 1f can be applied to a couple 1g having a socket in a T letter shape or to a couple 1h having a socket in a cross shape as shown in Fig. 12B. As for the couple in the T letter shape or in the cross shape, a portion F for connecting to a slope of the tapered surface had better be continuously connected by a curve surface. In case it has an angle, the stress concentrates on that.

(Another method for preventing the transformation)

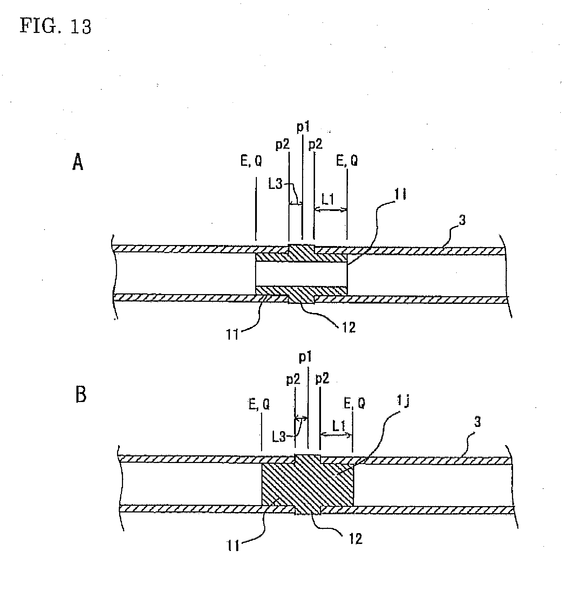

Although the quenching (including carburization) and the cold working have been described as the methods for making the metal pipe hard to transform in adding the tensile force, as shown in Fig. 13, the transformation can be also controlled by inserting a metallic column member into the metal pipe.
That is, although the metal pipe 3 is extended by the tensile force and has the diameter reduced, it can fight against the reduction of the diameter because there is a column member 11 in the pipe. In the figure, the same reference numbers are marked to portions corresponding to the above-mentioned embodiment. Each of these couples 1i, 1j has the column member 11 to be inserted into the metal pipe 3 to both ends, not having a taper shape differently from the above-mentioned couple, which is bonded from the outside of the metal pipe or the metal board. The base p2 of the column member 11 is not agreed with the center position p1 of each of the couples 1i, 1j, and displaced from the position p1 by the distance L3. An interval distance between each of right and left positions p2 of the couples 1i, 1j and the tip position E of the cylinder is determined to the same length L1 as the case shown in Fig. 1.

A flange 12 having a further large diameter is formed between the right and left positions p2 which are positioned at the bottoms of the right and left column members 11. The diameter of a flange is made larger than the diameter of an inner hole of the metal pipe 3.

The outer diameter of the column member 11 is smaller than the inner diameter of the metal pipe by 0.2 - 0.6 mm to control an opening of the adhesion to 0.1 - 0.3 mm. According to the couple like this, it is possible to control the transformation of the bonding portion of the metal pipe 3 due to the tensile without the quenching or the cold working. Therefore, the strength of the adhesive surface can be secured.

As for the column member 11 and the flange 12, a hollow one as shown in Fig. 13A and a solid one of steel as shown in Fig. 13B can be used.

The same reference numbers are marked to the corresponding portions in Figs. 1 - 12, and the explanation is simplified.

**Claims**

1. A method for bonding a metal member to be bonded comprising:

   forming a socket portion having an insertion hole which an end portion of a metal member is inserted and bonded with adhesive;
   forming an outer surface of the socket portion a tapered surface as increasing gradually from an opening end to a back side;
   forming a metal insertion couple that a tensile strength of the socket portion at the deepest portion in a direction of a center line of the insertion hole is equal to or higher than a tensile strength of the metal member to be bonded in the direction of the center line;
   forming the insertion hole to have a larger width than the end portion of the metal member to be bonded in a range of 0.2 mm - 0.6 mm;
   performing quenching or cold working to the end portion of the metal member to be bonded;
   pressing the end portion of the metal member to be bonded into the insertion hole; and
   densely existing an adhesive between the end portion of the metal member to be bonded and an inner surface of the insertion hole.

2. A method for bonding a metal member to be bonded as claimed in claim 1, wherein an area for existing the adhesive between the end portion of the metal member to be bonded and the inner surface of the insertion hole is determined so that a value multiplied the area by a shearing stress per a unit area when the adhesive is ruptured is over the tensile strength of the metal member to be bonded in the direction of the center line.

3. A method for bonding a metal member to be bonded as claimed in claim 1, wherein the metal member is a metal pipe.

4. A method for bonding a metal member to be bonded as claimed in claim 1, wherein ball members each having a smaller diameter than half of the width of the insertion hole are located between an outer surface of the end portion of the metal member to be bonded and the inner surface of the insertion hole in a monolayer and separately.

5. A method for bonding a metal member to be bonded as claimed in claim 1, wherein a plenty of ball members are adhered to the outer surface of the end portion of the metal member to be bonded or the inner surface of the insertion hole with the adhesive in a monolayer, and thereafter, the end portion of the metal member to be bonded is pressed into and bonded to the socket portion after painting the adhesive to the whole surface of an outer circumference of the end portion and/or the inner surface of the insertion hole.

6. A method for bonding a metal member to be bonded as claimed in claim 4 or 5, wherein the ball members are made of metal, glass or ceramics.

7. A structure for bonding a metal pipe to be bonded and a couple, comprising:

   a socket portion of the couple having an inner circumference of an insertion hole for inserting the metal pipe formed a straight cylindrical surface concentric with the socket portion, besides having an outer circumference from an opening end to its back side formed a tapered surface so that a diameter is reduced gradually from the back side to the opening end, wherein a tensile strength of the socket portion at the deepest position in a direction of a center line of the insertion hole being equal to or higher than a tensile strength of the metal member to be bonded in the direction of the center line;
   an outer circumference of an end portion of the metal pipe being formed parallel to the cylindrical surface, and an inside diameter of the cylindrical surface being larger than an outside diameter of the metal pipe in a range of 0.2 mm - 0.6 mm;

the end portion of the metal pipe being quenched or cold worked; and

an adhesive densely being existed between the outer circumference of the end portion of the metal pipe and the inner circumference of the insertion hole.

8. A structure for bonding a metal pipe to be bonded and a couple as claimed in claim 6, wherein ball members each having a smaller diameter than half of the width of the insertion hole are located between the outer circumference of the end portion of the metal member to be bonded and the inner circumference of the insertion hole in a monolayer and separately.

9. A method for bonding a metal pipe comprising:

forming a metal couple having a column member and a flange portion, said metal couple having an outer circumferential surface formed a straight cylindrical surface, said flange portion having an outside diameter larger than an inside diameter of a metal pipe to be connected to a bottom of the column member;

pressing the column member into the end portion of the metal pipe to be bonded, the metal pipe having an inner circumference of an end portion of the metal pipe parallel to the cylindrical surface and making an inside diameter of the cylindrical surface smaller than an outside diameter of the metal pipe in a range of 0.2 mm - 0.6 mm; and

existing an adhesive densely between the inner circumference of the end portion of the metal pipe and the outer circumference of the column member.

FIG. 1

FIG. 2

FIG. 3

FIG. 4

FIG. 5

FIG. 6

FIG. 7

FIG. 8

FIG. 9

FIG. 10

FIG. 11

FIG. 12

A

30

1g

30

F

F

30

B

30

1h

30

F

F

30

F

F

30

FIG. 13

A

B

## INTERNATIONAL SEARCH REPORT

| International application No. |
|---|
| PCT/JP2008/071489 |

A.  CLASSIFICATION OF SUBJECT MATTER
*F16B11/00*(2006.01)i, *C09J5/00*(2006.01)i, *C09J201/00*(2006.01)i, *F16L13/10*
(2006.01)i

According to International Patent Classification (IPC) or to both national classification and IPC

B.  FIELDS SEARCHED

Minimum documentation searched (classification system followed by classification symbols)
F16B11/00, C09J5/00, C09J201/00, F16L13/10

Documentation searched other than minimum documentation to the extent that such documents are included in the fields searched
Jitsuyo Shinan Koho            1922-1996   Jitsuyo Shinan Toroku Koho   1996-2009
Kokai Jitsuyo Shinan Koho     1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 05-039887 A  (Kubota Corp.), 19 February, 1993 (19.02.93), Par. Nos. [0012] to [0013] (Family: none) | 1-9 |
| Y | JP 09-217883 A  (Shuichi TSUCHIYA), 19 August, 1997 (19.08.97), Full text; Fig. 4 (Family: none) | 1-8 |
| Y | JP 2002-295420 A  (West Japan Railway Co.), 09 October, 2002 (09.10.02), Par. No. [0053] (Family: none) | 1-9 |

☒   Further documents are listed in the continuation of Box C.        ☐   See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    23 February, 2009 (23.02.09) | Date of mailing of the international search report<br>    03 March, 2009 (03.03.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/071489 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 06-257607 A  (Nippon Steel Corp.), 16 September, 1994 (16.09.94), Par. No. [0007] (Family: none) | 1-9 |
| Y | JP 2001-182874 A  (Sumitomo Metal Industries, Ltd.), 06 July, 2001 (06.07.01), Par. Nos. [0026] to [0027] (Family: none) | 1-8 |
| Y | JP 10-146681 A  (Sumitomo Metal Industries, Ltd.), 02 June, 1998 (02.06.98), Par. No. [0002] & US 6024276 A            & EP 0900622 A1 | 1-8 |
| Y | JP 55-115679 A  (Nippon Steel Corp.), 05 September, 1980 (05.09.80), Full text; Fig. 2 (Family: none) | 4-6,8 |
| Y | Microfilm of the specification and drawings annexed to the request of Japanese Utility Model Application No. 183902/1986(Laid-open No. 087383/1988) (NEC Kansai, Ltd.), 07 June, 1988 (07.06.88), Full text; Fig. 1 (Family: none) | 9 |
| Y | JP 55-093411 A  (Kansai Paint Co., Ltd.), 15 July, 1980 (15.07.80), Full text; Fig. 5 (Family: none) | 9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9217883 A

- JP 5346187 A

**Non-patent literature cited in the description**

- Effects of Coupling Shape to the Strength of Metallic Glued Hollow Shaft Coupling Japanese Mechanics Society Collection (Volume A). *Effects of Coupling Shape to the Strength of Metallic Glued Hollow Shaft Coupling Japanese Mechanics Society Collection (Volume A),* May 1986, vol. 52 (477), 1252-1256